# EUROPEAN PATENT SPECIFICATION

(11) **EP 3 829 080 B1**
(45) Date of publication and mention of the grant of the patent: **31.07.2024**
(21) Application number: 18941155.6
(22) Date of filing: 30.11.2018
(51) Int. Cl.: H04B 10/075, H04B 10/079, H04B 10/27, H04Q 11/00

(54) **PON FAULT LOCATION METHOD AND DEVICE**
VERFAHREN UND VORRICHTUNG ZUR PON-FEHLERORTUNG
PROCÉDÉ ET DISPOSITIF DE LOCALISATION DE DÉFAILLANCE DE PON

(43) Date of publication of application: 02.06.2021
(73) Proprietor: HUAWEI TECHNOLOGIES CO., LTD., Shenzhen, Guangdong 518129 (CN)
(72) Inventor: ZHANG, Zhao, Shenzhen, Guangdong 518129 (CN); ZHENG, Gang, Shenzhen, Guangdong 518129 (CN); LUO, Yong, Shenzhen, Guangdong 518129 (CN); XIE, Yuming, Shenzhen, Guangdong 518129 (CN)
(74) Representative: Epping - Hermann - Fischer
(86) International application number: PCT/CN2018/118779
(87) International publication number: WO 2020/107481

(56) References cited:
- CN-A- 102 386 974
- CN-A- 103 597 848
- CN-A- 107 911 762
- CN-A- 107 911 762
- US-A1- 2014 099 099
- US-A1- 2015 215 034
- US-A1- 2016 234 582

## Description

### TECHNICAL FIELD

This application relates to optical network technologies, and in particular, to a passive optical network (Passive Optical Network, PON) fault locating method and apparatus and PON.

### BACKGROUND

With the mature evolution of PON technologies, the fiber to the home (Fiber TO The Home, FTTH) or the fiber to the curb (Fiber TO The Curb, FTTC) has become a worldwide mainstream technology for high-bandwidth home access. A PON usually uses a point-to-multipoint (point-to-multipoint, P2MP) networking mode. In the P2MP networking mode, an optical line terminal (Optical Line terminal, OLT) is connected to an optical network unit (Optical Network Unit, ONU) by using an optical distribution network (Optical Distribution Network, ODN). Each ONU may be connected to a plurality of user equipments. Fault locating for a PON optical path becomes more difficult due to a networking mode of the PON, an active or a passive ODN, and an ONU with complex functions.

In the prior art, various network management systems of vendors provide topology (topology, TOPO) information of a P2MP connection between a PON interface and a connected ONU; and various resource management systems of operators provide TOPO information of an entire network, where the TOPO information includes manually entered information about a passive optical component: an optical splitter. When the PON optical path is faulty, the network management system of the vendor reports abnormal information of an optical module and an optical path through an alarm. The resource management system of the operator receives the abnormal information reported by the network management system of the vendor. Faulty processing personnel logs in the OLT or the ONU to query a related status, determine a faulty device, and determine based on the TOPO information of the PON interface and the TOPO information of the entire network whether a fault type is a group fault or an individual fault.

However, due to a relatively large quantity of ONUs in the PON, manually fault determining has low efficiency and low accuracy.

Document CN 107 911 762 A discloses an ONU fault diagnosis method based on a decision-making tree. The ONU fault diagnosis method based on the decision-making tree comprises the steps of: S1, acquiring state characteristics and faults, alarm characteristics and faults, and performance characteristics and faults of an ONU within a time period, and obtaining the corresponding relationship between the characteristics and faults; S2, constructing the decision-making tree according to the corresponding relationship between the characteristics and faults; S3, acquiring real-time characteristics of the ONU, and inputting into the decision-making tree to perform ONU fault diagnosis; and S4, performing performance analysis on a fault diagnosis result, and, if performance requirements are not satisfied, constructing the decision-making tree again. The method replaces an artificial fault diagnosis method; the fault diagnosis efficiency is increased; furthermore, the accuracy rate is relatively high; and the false alarm rate is relatively low.

Document US 2014/0099099 A1 refers to a fault detection method that includes collecting operational parameters of the optical network, collecting information about the structure of the optical network, providing diagnosis outputs by a diagnosis engine analyzing the structure information and the operational parameters, and deriving optical network faults from the diagnosis outputs. The collected operational parameters and the collected structure information may be stored in a database. The operational parameters are related to equipment, Quality-of-Service and/or architecture of the optical network. The optical network faults derived from the diagnosis outputs may concern equipment issues, interoperability problems and/or physical defects. The diagnosis engine generates the diagnosis outputs by using decision trees, Bayesian network techniques and/or multivariate classification techniques.

Document US 2015/0215034 A1 refers to an OLT that includes a topology map holder that holds a topology map of a PON system, a link interruption detector that detects a link interruption of an ONU, a warning collector that collects warnings from an ONU, a filter that extracts a warning resulting from an ONU from the warnings collected by the warning collector, a fault part estimator that, when a link interruption of an ONU is detected by the link interruption detector and there is no warning which is extracted by the filter, estimates in which of optical fiber cables a fault has occurred on the basis of the topology map held by the topology map holder, and a fault part notifier that notifies information showing the fault part estimated by the fault part estimator to outside the OLT.

### SUMMARY

This application provides a PON fault locating method and apparatus and PON, to improve efficiency and accuracy of PON fault locating. The present invention is defined by the attached set of claims. Embodiments and aspects which are not covered by the invention should be considered as examples useful for understanding the invention.

A first aspect of this application provides a PON fault locating method, including the following steps: First, a fault locating apparatus obtains parameters and optical line parameters of a plurality of node devices in a PON, where the plurality of node devices include an optical line terminal OLT and an optical network unit ONU; and then, the fault locating apparatus inputs the parameters and the optical line parameters of the plurality of node devices into a first fault locating model that is pre-established through training, to obtain a first fault locating result of the PON.

In an example manner, that the fault locating apparatus obtains parameters and optical line parameters of a plurality of node devices in a passive optical network PON includes that
the fault locating apparatus receives the parameters and the optical line parameters of the node devices that are sent by the plurality of node devices; or
the fault locating apparatus receives the parameters and the optical line parameters of the plurality of node devices that are preprocessed by a collection apparatus.

In an example manner, that the fault locating apparatus inputs the parameters and the optical line parameters of the plurality of node devices into a first fault locating model that is pre-established through training, to obtain a first fault locating result of the PON includes that
the fault locating apparatus performs feature extraction on the parameters and the optical line parameters of the plurality of node devices to obtain feature parameters; andthe fault locating apparatus inputs the feature parameters into the first fault locating model, to obtain the first fault locating result.

In an example manner, after the fault locating apparatus performs the feature extraction on the parameters and the optical line parameters of the plurality of node devices to obtain the feature parameters, the method further includes that
the fault locating apparatus inputs the feature parameters into a topology model that is pre-established through training, to obtain topology information of the PON and/or topology information of a PON interface of the OLT.

That the fault locating apparatus inputs the feature parameters into the first fault locating model, to obtain the first fault locating result includes that
the fault locating apparatus inputs the feature parameters into a pre-established fault type model, to obtain a fault type; and
the fault locating apparatus inputs the fault type and at least one of the topology information of the PON and the topology information of the PON interface into the first fault locating model, to obtain the first fault locating result.

In an example manner, the method further includes that
the fault locating apparatus sends the first fault locating result to an operation support system OSS or an application server. In an example manner, the method further includes that
the fault locating apparatus performs fault prediction based on the first fault locating result, to obtain a fault prediction result; and
the fault locating apparatus sends the fault prediction result to the operation support system OSS or the application server.

The method further includes that
the fault locating apparatus receives second fault locating results sent by the plurality of node devices, where the second fault locating result sent by each node device is obtained by the node device by inputting parameters and optical line parameters of the node device into a second fault locating model that is pre-established through training; and
the fault locating apparatus obtains a comprehensive fault locating result based on the first fault locating result and the second fault locating results.

In an example manner, the method further includes that
the fault locating apparatus sends the comprehensive fault locating result to the operation support system OSS or the application server.

A second aspect of this application provides a PON fault locating method, including:
a node device obtains parameters and optical line parameters of the node device, where the node device is an optical line terminal OLT or an optical network unit ONU;
the node device sends parameters of an optical module and the optical line parameters to a fault locating apparatus; and
the node device sends the parameters and the optical line parameters of the node device to the fault locating apparatus.

The method further includes that the node device inputs the parameters and the optical line parameters of the node device into a second fault locating model that is pre-established through training, to obtain a second fault locating result of the node device.

In an example manner, the method further includes that
the node device sends the second fault locating result to the fault locating apparatus.

A third aspect of this application provides a PON fault locating apparatus, including:
an obtaining module, configured to obtain parameters and optical line parameters of a plurality of node devices in a passive optical network PON, where the node devices include an optical line terminal OLT and an optical network unit ONU; and
a fault locating module, configured to input the parameters and the optical line parameters of the plurality of node devices into a first fault locating model that is pre-established through training, to obtain a first fault locating result of the PON.

In an example manner, the obtaining module is specifically configured to:
receive the parameters and the optical line parameters of the node devices that are sent by the plurality of node devices; or
receive the parameters and the optical line parameters of the plurality of node devices that are preprocessed by a collection apparatus.

In an example manner, the fault locating module is specifically configured to:
perform feature extraction on the parameters and the optical line parameters of the plurality of node devices to obtain feature parameters; and
input the feature parameters into the first fault locating model, to obtain the first fault locating result.

In an example manner, the apparatus further includes:
a topology determining module, configured to input the feature parameters into a topology model that is pre-established through training, to obtain topology information of the PON and/or topology information of a PON interface of the OLT.

The fault locating module is further configured to:
input the feature parameters into a pre-established fault type model, to obtain a fault type; and
input the fault type and at least one of the topology information of the PON and the topology information of the PON interface into the first fault locating model, to obtain the first fault locating result.

In an example manner, the apparatus further includes:
a sending module, configured to send the first fault locating result to an operation support system OSS or an application server.

In an example manner, the apparatus further includes:
a fault prediction module, configured to perform fault prediction based on the first fault locating result, to obtain a fault prediction result.

The sending module is configured to send the fault prediction result to the operation support system OSS or the application server.

The apparatus further includes:
a receiving module, configured to receive second fault locating results sent by the plurality of node devices, where the second fault locating result sent by each node device is obtained by the node device by inputting parameters and optical line parameters of the node device into a second fault locating model that is pre-established through training.

The fault locating module is further configured to obtain a comprehensive fault locating result based on the first fault locating result and the second fault locating results.

The sending module is further configured to send the comprehensive fault locating result to the OSS or the application server.

A fourth aspect of this application provides a PON fault locating apparatus, including:
an obtaining module, configured to: obtain parameters and optical line parameters of a node device, where the node device is an optical line terminal OLT or an optical network unit ONU; and
a sending module, configured to send the parameters and the optical line parameters of the node device to a fault locating apparatus.

The apparatus further includes:
a fault locating module, configured to input the parameters and the optical line parameters of the node device into a second fault locating model that is pre-established through training, to obtain a second fault locating result of the node device.

The sending module is further configured to:
send the second fault locating result to the fault locating apparatus.

A fifth aspect of this application provides a passive optical network PON, including: a plurality of node devices and a fault locating apparatus. The plurality of node devices include an optical line terminal, OLT, and an optical network unit ONU.

Each of the plurality of node devices includes the PON fault locating apparatus according to the fourth aspect of this application.

The fault locating apparatus includes the PON fault locating apparatus according to the third aspect of this application. In an example manner, the PON further includes:
a collection apparatus, configured to: obtain parameters and optical line parameters of the plurality of node devices, and perform preprocessing on the parameters and the optical line parameters of the plurality of node devices. The collection apparatus is further configured to send, to the fault locating apparatus, the preprocessed parameters and the preprocessed optical line parameters of the plurality of node devices.

A sixth aspect of this application provides a fault locating apparatus, including a processor, a memory, and a transceiver. The memory is configured to store an instruction. The transceiver is configured to communicate with another device. The processor is configured to execute the instruction stored in the memory, so that the fault locating apparatus performs the method according to the first aspect of this application.

A seventh aspect of this application provides a node device, including a processor, a memory, and a transceiver. The memory is configured to store an instruction. The transceiver is configured to communicate with another device. The processor is configured to execute the instruction stored in the memory, so that the node device performs the method according to the second aspect of this application.

An eighth aspect of this application provides a computer readable storage medium. The computer readable storage medium stores an instruction. When the instruction is executed, a computer is enabled to perform the method according to the first aspect of this application.

A ninth aspect of this application provides a computer readable storage medium. The computer readable storage medium stores an instruction. When the instruction is executed, a computer is enabled to perform the method according to the second aspect of this application.

This application provides the PON fault locating method and apparatus provided. The method includes: the fault locating apparatus obtains the parameters and the optical line parameters of the plurality of node devices in the PON, where the plurality of node devices include the OLT and the ONU; and then, inputs the parameters and the optical line parameters of the plurality of node devices into the first fault locating model that is pre-established through training, to obtain the first fault locating result of the PON. The fault locating apparatus analyzes the parameters and the optical line parameters of the plurality of node devices in the PON by using an AI algorithm, to locate a fault in the PON, thereby improving accuracy and efficiency of the fault locating.

### BRIEF DESCRIPTION OF DRAWINGS

FIG. 1 is a schematic architectural diagram of a PON according to Embodiment 1 of this application;
FIG. 2 is a schematic architectural diagram of a PON according to Embodiment 2 of this application;
FIG. 3 is a flowchart of a PON fault locating method according to Embodiment 3 of this application;
FIG. 4 is a flowchart of a PON fault locating method according to Embodiment 4 of this application;
FIG. 5 is a flowchart of signaling in a PON fault locating method according to Embodiment 5 of this application;
FIG. 6 is a schematic structural diagram of a PON fault locating apparatus according to Embodiment 6 of this application;
FIG. 7 is a schematic structural diagram of a PON fault locating apparatus according to Embodiment 7 of this application;
FIG. 8 is a schematic structural diagram of a fault locating apparatus according to Embodiment 8 of this application; and
FIG. 9 is a schematic structural diagram of a node device according to Embodiment 9 of this application.

### DESCRIPTION OF EMBODIMENTS

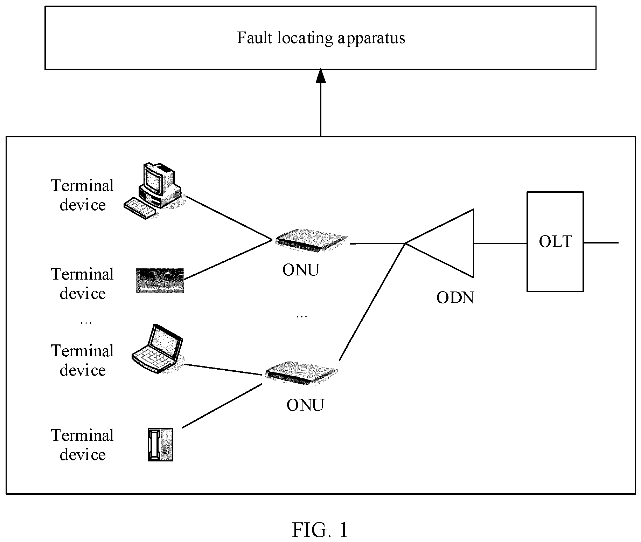

This application provides a PON. FIG. 1 is a schematic architectural diagram of a PON according to Embodiment 1 of this application. As shown in FIG. 1, the PON includes a plurality of node devices and a fault locating apparatus. The plurality of node devices include an ONU and an OLT.

A plurality of ONUs are connected to a same OLT by using an ODN. The OLT is connected to a network. One ONU may be connected to a plurality of terminal devices, for example, a mobile phone, a fixed-line phone, a tablet computer, a personal computer (personal computer, PC), and a mobile base station. The terminal device may perform services such as a voice service, an Internet surfing service, and a video service. FIG. 1 is described only as an example. The PON may further include more OLTs and ONUs.

The OLT is a core component in the PON. The OLT is connected to an upper-layer network-side device (such as a switch or a router), and is connected to one or more lower-layer ODNs. The OLT is connected to the client device ONUs through the ODN, to implement functions such as a control function, a management function, and a ranging function on the ONUs. One OLT may provide a plurality of interfaces that are referred to as PON interfaces. Each PON interface may be connected to one or more ODNs.

The ONU is the client device in the PON. The ONU is placed on a client, and cooperates with the OLT to implement Ethernet layer 2 functions and Ethernet layer 3 functions, to provide voice, data, and multimedia services for a user. Main functions of the ONU are as follows: selectively receiving data sent by the OLT; responding to a management command sent by the OLT, and making a corresponding response; and buffering Ethernet data of the user, and sending the Ethernet data in an upstream direction in a sending window assigned by the OLT.

It should be noted that, if the ONU provides an Ethernet user port or a plain old telephone service (plain old telephone service, POTS) user port, the ONU is referred to as an optical network terminal (optical network termination, ONT). The ODN includes a passive optical splitter used for optical power distribution, a feeder optical fiber connected between the passive optical splitter and the OLT, and a distribution optical fiber connected between the passive optical splitter and the ONU. During downlink data transmission, the ODN transmits downlink data of the OLT to each ONU by using the optical splitter. Similarly, during uplink data transmission, the ODN aggregates uplink data of the ONUs and transmits the data to the OLT.

At least a 1-level optical splitter is disposed between the OLT and the ONU. When an optical fiber line connecting the OLT and the ONU passes through only one optical splitter, an optical network in this case is a 1-level optical splitting network. When an optical fiber line connecting the OLT and the ONU passes through two optical splitters, an optical network in this case is a 2-level optical splitting network. From the OLT to the ONU, a first passed optical splitter is a level 1 optical splitter, and a second passed optical splitter is a level 2 optical splitter. When an optical fiber line connecting the OLT and the ONU passes through three or more optical splitters, an optical network in this case is a multi-level optical splitting network. From the OLT to the ONU, a first passed optical splitter is a level 1 optical splitter, a second passed optical splitter is a level 2 optical splitter, and so on. An N^{th} passed optical splitter is a level N optical splitter.

In this embodiment of this application, the fault locating apparatus may be one or more independent devices; or may be integrated with another device, for example, integrated into a network management system of a vendor, integrated into a resource management system of an operator, or integrated into a gateway or an application server. A form of the fault locating apparatus is not limited in this embodiment.

The node device is configured to obtain parameters and optical line parameters of the device, and send the parameters and the optical line parameters of the node device to the fault locating apparatus. The parameters of the node device include parameters of an optical module (optical module) and parameters of another component in the node device. The OLT and the ONU may include one or more optical modules. The optical module includes an optoelectronics component, a function circuit, an optical interface, and the like. The optoelectronics component includes a transmit part and/or a receive part. The optical module can perform optical-to-electrical conversion and electrical-to-optical conversion. A transmit end of the optical module converts an electrical signal into an optical signal, and a receive end converts an optical signal into an electrical signal.

The optical module may be classified based on functions into an optical receiving module, an optical sending module, an optical transceiver module, an optical forwarding module, or the like. The optical module is classified based on use manners into a hot-swappable optical module or a non-hot-swappable optical module. The optical module may be classified based on encapsulation types into SFF, SFP, GBIC, XENPAK, XFP, or the like. The optical module may be classified based on transfer modes into an asynchronous transfer mode PON (ATM passive optical network, APON), a broadband PON (broadband passive optical network, BPON), an Ethernet PON (Ethernet passive optical network, EPON), a gigabit PON (gigabit passive optical network, GPON), a 10 gigabit Ethernet PON (10G Ethernet passive optical network, 10G-EPON), or the like.

The optical module of the OLT is configured to: receive uplink data from the ONU, and send the uplink data of the ONU to the network; and is further configured to: receive downlink data from the network, and send the downlink data to the ONU. The optical module of the ONU is configured to: receive uplink data from user equipment (User equipment, UE), and send the uplink data to the OLT; and the optical module of the ONU is further configured to: receive downlink data from the OLT, and send the received downlink data to the UE.

The parameters of the optical module may include: a module type, a module voltage, a module current, a module temperature, a receive power, a transmit power, a receive bit error rate, and the like.

In addition to the optical module, the node device may further include the another component such as a PON MAC chip. The PON MAC chip is configured to perform protocol deframing or framing on an electrical signal. The node device may further include a component or a chip for implementing a forwarding function, to implement local area network switch (LAN switch, LSW) forwarding, network processing (network process, NP), traffic management (traffic management, TM), or the like. The node device further includes a storage apparatus, a battery module, and the like. In addition to the parameters of the optical module, the parameters of the another component of the node device may further be obtained. Different components may have different parameters. The parameters are not listed one by one herein.

The node device may obtain the parameters of the device through detection; or may directly obtain these parameters, and directly report the parameters to the fault locating apparatus. The parameters reported by the node device may be dynamically configured by the fault locating apparatus .

The op tical line indicates a path used for transmitting an optical signal between the OLT and the ONU. The optical line may include a feeder optical fiber, a distribution optical fiber, and a passive component such as an optical splitter. The optical line parameters may include quality of an optical signal on the optical line, for example, optical layer statistics collection, optical layer alarming, and optical ranging. The optical line parameters may be obtained through monitoring performed by the OLT and the ONT. Description is provided herein by using only an example. This is not limited in this embodiment.

The node device may periodically detect the parameters and the optical line parameters of the device. To improve accuracy and effectiveness of the fault locating, the node device may set a relatively short detection periodicity, to detect a fault in time. In the prior art, in some scenarios, the fault locating is difficult due to lack of a detection instrument for detecting the parameters and the optical line parameters of the node device. For example, it is impossible to determine a specific optical splitter to which an ONU is connected, and it is also impossible to determine whether the node device or the optical line is faulty when the fault occurs.

In this embodiment, each ONU and each OLT in the PON can detect the parameters and the optical line parameters of the device, and all the ONUs and all the OLTs in the PON report the parameters and the optical line parameters of the device to the fault locating apparatus, so that the fault locating in the PON is easy to implement.

After obtaining the parameters and the optical line parameters of the plurality of node devices in the PON, the fault locating apparatus inputs the parameters and the optical line parameters of the plurality of node devices into a first fault locating model that is pre-established through training, to obtain a first fault locating result of the PON.

In this embodiment, the fault locating apparatus performs fault locating by using an artificial intelligence (Artificial Intelligence, AI) algorithm. The AI algorithm is used to set up a fault locating model through machine learning or deep learning based on a large quantity of samples. The fault locating model is subsequently used to locate the fault. The fault locating model may be but is not limited to a neural network model. The neural network model is a program and data that are obtained through training based on a large volume of data and that are used to perform neural network calculation such as cognitive calculation. A common neural network model includes a circular neural network module and a convolutional neural network model.

The fault locating apparatus obtains the first fault locating result of the PON by using a first fault locating model. The first fault locating result may include information about a fault type and information about a faulty device. For example, the fault locating apparatus performs feature extraction on the parameters and the optical line parameters of the plurality of node devices to obtain feature parameters, and inputs the feature parameters into the first fault locating model to obtain the first fault locating result.

The feature parameters extracted by the fault locating apparatus may include steady-state information, jitter information, and a trend of the optical module. Description is provided herein by using only an example. This is not limited thereto

Optionally, the fault locating apparatus is further configured to input the feature parameters into a pre-established fault type model, to obtain a fault type. The fault type may be a group fault or an individual fault. The group fault affects a large quantity of users possibly because the feeder optical fiber is faulty. The individual fault affects a small quantity of users, and possibly affects only a single user.

It may be understood that classification of the fault type into the massive fault or the single fault is performed in only one dimension. Certainly, the fault type may further be classified in other dimensions, for example, a damaged optical fiber, a bent optical fiber, and a loose connector.

The information about the faulty device is used to indicate a specific faulty device. The faulty device may be an OLT, an ONU, an optical splitter, or an optical fiber. The information about the faulty device may be an identifier of a device, for example, an identifier of the OLT or the identifier of the ONU. The information about the faulty device may be alternatively location information of the optical fiber, for example, a feeder optical fiber or an end optical fiber. The information about the faulty device may be alternatively an identifier of the optical splitter or location information of the optical splitter.

Optionally, the fault locating apparatus is further configured to: input the feature parameters into a topology model that is pre-established through training, to obtain topology information of the PON and/or topology information of the PON interface of the OLT; and input the fault type and at least one of the topology information of the PON and the topology information of the PON interface into the first fault locating model, to obtain the first fault locating result. The topology model may be set up by using a decision tree inheritance learning algorithm. The decision tree inheritance learning algorithm may be a gradient boosting decision tree (Gradient Boosting Decision Tree, GBDT) or a stacking algorithm.

A feature input into the topology model may be a change feature of optical modules of the plurality of ONUs and optical lines. Whether the ONUs are connected to a same optical splitter may be determined based on the change feature of the optical modules of the plurality of ONUs and the optical lines, to obtain the topology information of the PON and/or the topology information of the PON interface of the OLT.

The topology information of the PON is used to describe a connection relationship of all devices in the entire PON. One OLT may include a plurality of PON interfaces. Each PON interface may be connected to a plurality of ONUs. The topology information of the PON interface is used to describe a relationship between devices (including an ONU, an optical splitter, and the like) connected to the PON interface.

After the fault type, and the topology information of the PON and/or the topology information of the PON interface of the OLT are/is obtained, similarity analysis may be performed on abnormal actions of the plurality of ONUs connected to the same PON interface in a time window, to determine the faulty device.

Optionally, the fault locating apparatus may alternatively obtain the topology information of the PON and/or the topology information of the PON interface of the OLT from another device. For example, the fault locating apparatus receives the topology information of the PON from a resource management device, and receives the topology information of the PON interface of the OLT from a network management system of a device vendor.

After determining the first fault locating result, optionally, the fault locating apparatus sends the first fault locating result to an OSS or an application server. The OSS or the application server may generate a fault analysis report based on the first fault locating result, and present the fault analysis report to the user.

The node device is further configured to input the parameters and the optical line parameters of the node device into a second fault locating model that is pre-established through training, to obtain a second fault locating result of the node device. The second fault locating result may include a fault location and information about a fault type.

The node device sends the second fault locating result to the fault locating apparatus.

The second fault locating model is different from the first fault locating model. The fault locating apparatus performs centralized fault locating by using the first fault locating model, so that the fault locating apparatus can locate a fault in the entire PON. The OLT and the ONU perform distributed fault locating by using a second fault locating model, so that the OLT and the ONU can locate faults of the OLT and the ONU.

In this embodiment, each node device may independently perform distributed fault locating, or the fault locating apparatus may independently perform centralized fault locating, or the centralized fault locating and the distributed fault locating may be combined.

The fault locating apparatus receives second fault locating results sent by the plurality of node devices. The second fault locating result sent by each node device is obtained by the node device by inputting the parameters and the optical line parameters of the node device into the second fault locating model that is pre-established through training. The fault locating apparatus obtains a comprehensive fault locating result based on the first fault locating result and the second fault locating results, and sends the comprehensive fault locating result to the OSS or the application server. The fault locating can be more accurate by combining the centralized fault locating and the distributed fault locating. For example, the centralized fault locating can be used to locate only a faulty ONU but cannot be used to determine a specific fault type. In this case, the distributed fault locating can be used to accurately determine the fault type of the ONU.

Optionally, the fault locating apparatus is further configured to: perform fault prediction based on the first fault locating result to obtain a fault prediction result, and send the fault prediction result to the OSS or the application server. The fault prediction indicates inference analysis performed based on the located fault to obtain a possible future fault. For example, a trend of optical fiber cracking is predicted based on a current faulty optical fiber in the PON. The fault prediction result includes information about the possible future fault.

Optionally, the fault locating apparatus may alternatively perform the fault prediction based on the topology information of the PON and/or the topology information of the PON interface of the OLT.

In the PON provided in this embodiment, the fault locating apparatus is added. The fault locating apparatus obtains the parameters and the optical line parameters of all the node devices in the PON, and inputs the parameters and the optical line parameters of the plurality of node devices into the first fault locating model that is pre-established through training, to obtain the first fault locating result of the PON. In this way, a prior-art problem that fault locating in the PON is difficult due to a large quantity of node devices, a lot of problems in the optical lines, and difficulty in obtaining data required for the locating in the PON. In addition, the fault locating apparatus performs big data analysis by using an AI algorithm to locate the fault in the PON, thereby improving accuracy and efficiency of the fault locating.

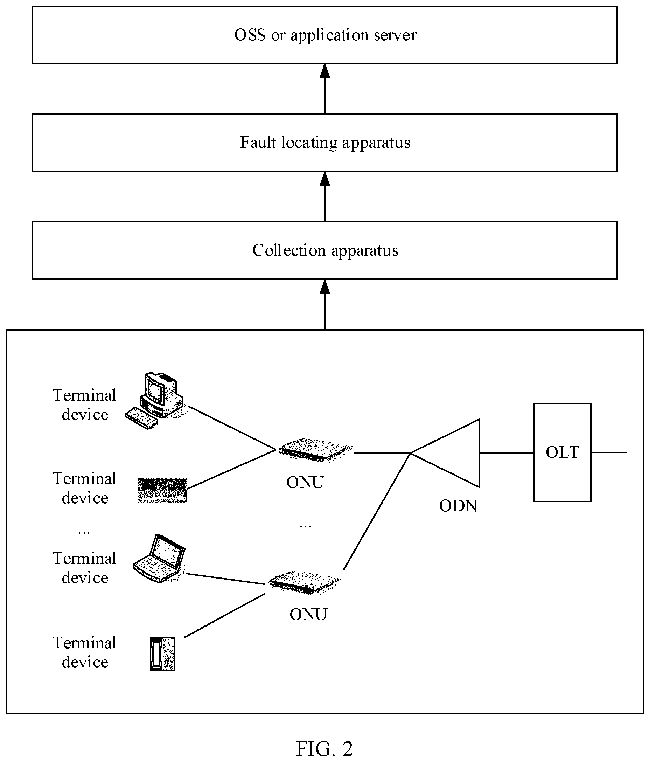

FIG. 2 is a schematic architectural diagram of a PON according to Embodiment 2 of this application. As shown in FIG. 2, based on FIG. 1, the PON in this embodiment further includes a collection apparatus. The collection apparatus may include one or more independent devices, or may be integrated with another device, for example, integrated into a gateway system of a vendor, or integrated into a resource management system of an operator, or integrated into a gateway or an application server.

The collection apparatus is configured to: receive parameters and optical line parameters that are sent by a plurality of node devices, preprocess the parameters and the optical line parameters of the plurality of node devices, and send the preprocessed parameters and the preprocessed optical line parameters of the plurality of node devices to a fault locating apparatus.

The preprocessing includes one or more of the following processing: aggregating the received parameters and the received optical line parameters of the node devices based on a time granularity; aggregating the received parameters and the received optical line parameters of the node devices in an object dimension, for example, performing aggregation according to a feeder optical fiber, an optical splitter, an OLT, and an ONU; and filtering out abnormal data in the received parameters and the received optical line parameters of the node devices.

The collection apparatus may further be configured to: dynamically configure a collection parameter, collection frequency, or a collection periodicity; and indicate, by configuring the collection parameter, the node device to collect a specific parameter.

The node device communicates with the collection apparatus by using a collection interface. The node device sends the parameters and the optical line parameters of the node device to the collection apparatus by using the collection interface. The collection interface includes but is not limited to the following interfaces: CLI, SNMP, TR069, SFTP, MQTT, and TELEMETRY

The collection apparatus sends the preprocessed parameters and the preprocessed optical line parameters of the plurality of node devices to the fault locating apparatus by using a data interface. The data interface may use a common message mechanism related to a big data platform, for example, KAFKA

The fault locating apparatus sends a first fault locating result to an OSS or an application server by using an output interface. The output interface includes but is not limited to a RESTful interface.

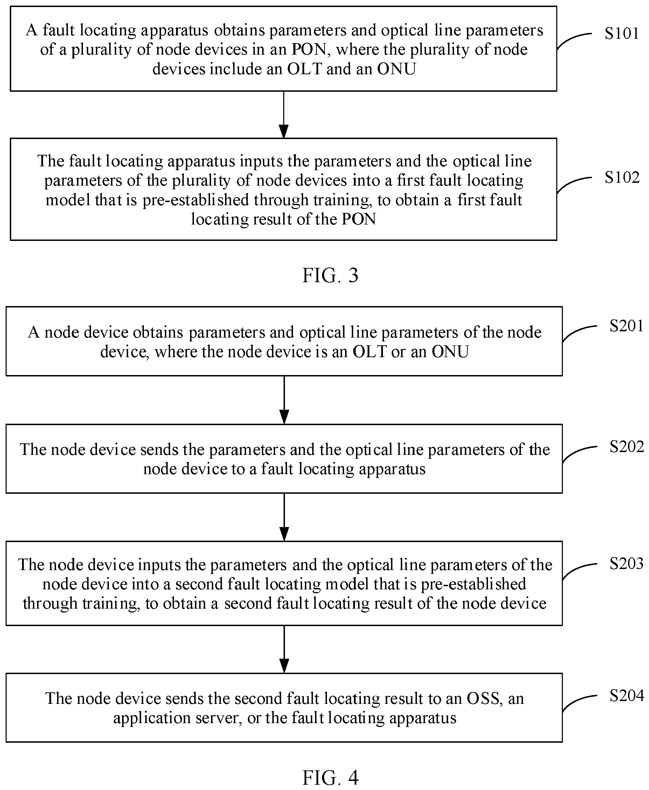

Based on the foregoing described PON, Embodiment 3 of this application provides a PON fault locating method. FIG. 3 is a flowchart of the PON fault locating method according to Embodiment 3 of the present invention. As shown in FIG. 3, the method provided in this embodiment includes the following steps:
Step S 101: A fault locating apparatus obtains parameters and optical line parameters of a plurality of node devices in a PON. The plurality of node devices include an OLT and an ONU.

The fault locating apparatus receives the parameters and the optical line parameters of the node devices that are sent by the plurality of node devices; or the fault locating apparatus receives the parameters and the optical line parameters of the plurality of node devices that are preprocessed by a collection apparatus. For the parameters and the optical line parameters of the node devices, refer to description in Embodiment 1. Details are not described herein again.

Step S102: The fault locating apparatus inputs the parameters and the optical line parameters of the plurality of node devices into a first fault locating model that is pre-established through training, to obtain a first fault locating result of the PON.

For example, the fault locating apparatus performs the feature extraction on the parameters and the optical line parameters of the plurality of node devices to obtain feature parameters, and inputs the feature parameters into the first fault locating model to obtain the first fault locating result.

Optionally, after the fault locating apparatus performs the feature extraction on the parameters and the optical line parameters of the plurality of node devices to obtain the feature parameters, the fault locating apparatus inputs the feature parameters into a topology model that is pre-established through training, to obtain topology information of the PON and/or topology information of a PON interface of the OLT. The fault locating apparatus inputs the feature parameters into a pre-established fault type model, to obtain a fault type; and inputs the fault type and at least one of the topology information of the PON and the topology information of the PON interface into the first fault locating model, to obtain the first fault locating result.

For a specific implementation this embodiment, refer to descriptions in the foregoing embodiments. Details are not described herein again.

Optionally, the fault locating apparatus sends the first fault locating result to an OSS or an application server.

Optionally, the fault locating apparatus further performs fault prediction based on the first fault locating result to obtain a fault prediction result, and sends the fault prediction result to the OSS or the application server. The OSS or the application server presents the fault prediction result to working staff, so that the working staff takes precautions or takes measures for a possible future fault to avoid the fault or minimize a possible loss caused by the fault.

The fault locating apparatus further receives second fault locating results sent by the plurality of node devices. The second fault locating result sent by each node device is obtained by the node device by inputting the parameters and the optical line parameters of the node device into a second fault locating model that is pre-established through training. The fault locating apparatus obtains a comprehensive fault locating result based on the first fault locating result and the second fault locating results, and sends the comprehensive fault locating result to the OSS or the application server.

In this embodiment, the fault locating apparatus obtains the parameters and the optical line parameters of the plurality of node devices in the PON. The plurality of node devices includes the OLT and the ONU. The fault locating apparatus inputs the parameters and the optical line parameters of the plurality of node devices into the first fault locating model that is pre-established through training, to obtain the first fault locating result of the PON. The fault locating apparatus analyzes the parameters and the optical line parameters of the plurality of node devices in the PON by using an AI algorithm, to locate a fault in the PON, thereby improving accuracy and efficiency of the fault locating.

Based on the foregoing described PON, Embodiment 4 of this application provides a PON fault locating method. FIG. 4 is a flowchart of the PON fault locating method according to Embodiment 4 of the present invention. As shown in FIG. 4, the method provided in this embodiment includes the following steps:
Step S201: A node device obtains parameters and optical line parameters of the node device. The node device is an OLT or an ONU.
Step S202: The node device sends the parameters and the optical line parameters of the node device to a fault locating apparatus.

The node device sends the parameters and the optical line parameters to the fault locating apparatus. The fault locating apparatus performs centralized fault locating based on parameters and optical line parameters of a plurality of node devices in the PON.

Step S203: The node device inputs the parameters and the optical line parameters of the node device into a second fault locating model that is pre-established through training, to obtain a second fault locating result of the node device. The node device performs distributed fault locating based on the parameters and the optical line parameters of the node device, to obtain the second fault locating result. The second fault locating result includes a fault location and information about a fault type.

Step S204: The node device sends the second fault locating result to the fault locating apparatus.

In this embodiment, the node device obtains the parameters and the optical line parameters of the node device. The node device is an OLT or an ONU. The node device sends the parameters and the optical line parameters of the node device to the fault locating apparatus, so that the fault locating apparatus performs big data analysis by using an AI algorithm based on the parameters and the optical line parameters of the node device in the PON to locate a fault in the PON. In addition, the node device performs distributed fault locating by using the AI algorithm based on the obtained parameters and the obtained optical line parameters. Accuracy of the fault locating is further improved by combining the centralized fault locating and the distributed fault locating.

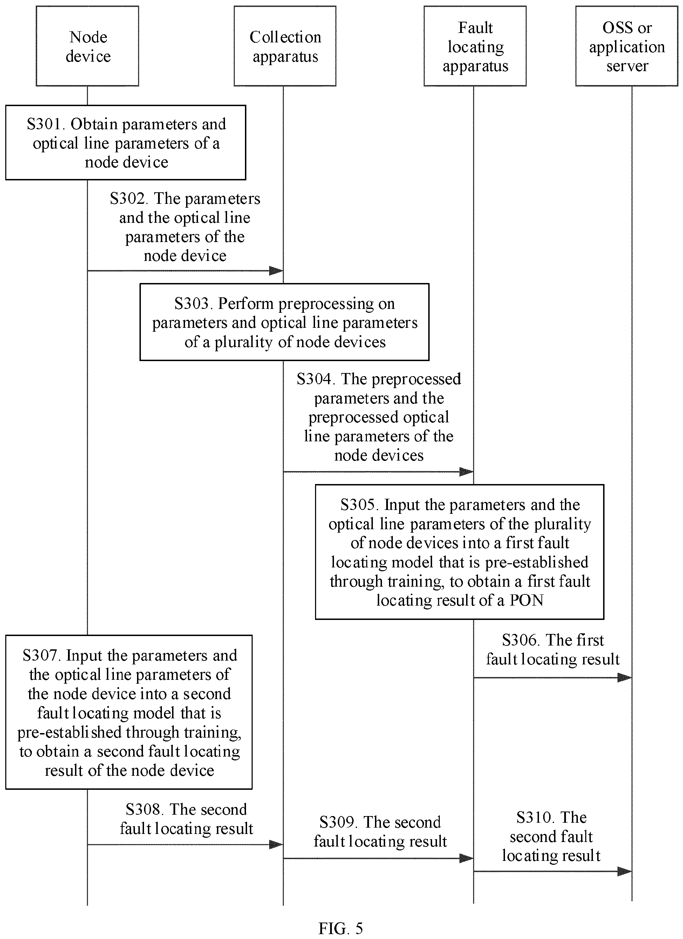

Based on the foregoing described PON, Embodiment 5 of this application provides a PON fault locating method. FIG. 5 is a flowchart of signaling in the PON fault locating method according to Embodiment 5 of the present invention. As shown in FIG. 5, the method provided in this embodiment includes the following steps:
Step S301: A node device obtains parameters and optical line parameters of the node device.
Step S302: The node device sends the parameters and the optical line parameters of the node device to a collection apparatus.
Step S303: The collection apparatus performs preprocessing on parameters and optical line parameters of a plurality of node devices.
Step S304: The collection apparatus sends, to a fault locating apparatus, the preprocessed parameters and the preprocessed optical line parameters of the plurality of node devices.
Step 305: The fault locating apparatus inputs the parameters and the optical line parameters of the plurality of node devices into a first fault locating model that is pre-established through training, to obtain a first fault locating result of the PON.
Step S306: The fault locating apparatus sends the first fault locating result to an OSS or an application server.
Step S307: The node device inputs the parameters and the optical line parameters of the node device into a second fault locating model that is pre-established through training, to obtain a second fault locating result of the node device.
Step S308: The node device sends the second fault locating result to the collection apparatus.
Step S309: The collection apparatus sends the second fault locating result to the fault locating apparatus.
Step S310: The fault locating apparatus sends the second fault locating result to the OSS or the application server.

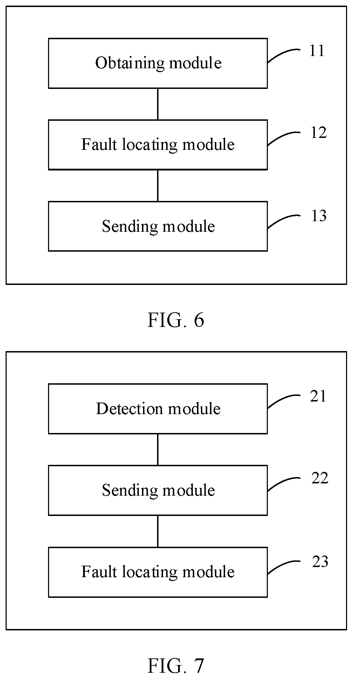

When the node device performs fault locating, steps S306 to S310 and steps S302 to S305 may be performed in parallel.FIG. 6 is a schematic structural diagram of a PON fault locating apparatus according to Embodiment 6 of this application. As shown in FIG. 6, the apparatus provided in this embodiment includes an obtaining module 11 and a fault locating module 12.

The obtaining module 11 is configured to obtain parameters and optical line parameters of a plurality of node devices in a PON. The node devices include an optical line terminal OLT and an optical network unit ONU.

The fault locating module 12 is configured to input the parameters and the optical line parameters of the plurality of node devices into a first fault locating model that is pre-established through training, to obtain a first fault locating result of the PON.

In an example manner, the obtaining module 11 is specifically configured to:
receive the parameters and the optical line parameters of the node devices that are sent by the plurality of node devices; or
receive the parameters and the optical line parameters of the plurality of node devices that are preprocessed by a collection apparatus.

In an example manner, the fault locating module 12 is specifically configured to:
perform feature extraction on the parameters and the optical line parameters of the plurality of node devices to obtain feature parameters; and
input the feature parameters into the first fault locating model, to obtain the first fault locating result.

In an example manner, the apparatus further includes: a topology determining module, configured to input the feature parameters into a topology model that is pre-established through training, to obtain topology information of the PON and/or topology information of a PON interface of the OLT.

Correspondingly, the fault locating module 12 is further configured to:
input, the feature parameters into a pre-established fault type model, to obtain a fault type; and
input, the fault type and at least one of the topology information of the PON and the topology information of the PON interface into the first fault locating model, to obtain the first fault locating result.

In an example manner, the apparatus further includes a sending module 13.

The sending module 13 is configured to send the first fault locating result to an OSS or an application server.

In an example manner, the apparatus further includes a fault prediction module.

The fault prediction module is configured to perform fault prediction based on the first fault locating result, to obtain a fault prediction result.

The sending module 13 is further configured to send the fault prediction result to the OSS or the application server. In an example manner, the apparatus further includes a receiving module.

The receiving module is configured to receive second fault locating results sent by the plurality of node devices. The second fault locating result sent by each node device is obtained by the node device by inputting the parameters and the optical line parameters of the node device into a second fault locating model that is pre-established through training. The fault locating module 12 is further configured to obtain a comprehensive fault locating result based on the first fault locating result and the second fault locating results.

The sending module 13 is configured to send the comprehensive fault locating result to the OSS or the application server.

The apparatus provided in this embodiment may be configured to perform the method performed by the fault locating apparatus in the foregoing embodiments. A specific implementation and a technical effect are similar to those of the method. Details are not described herein again.

FIG. 7 is a schematic structural diagram of a PON fault locating apparatus according to Embodiment 7 of this application. As shown in FIG. 7, the apparatus provided in this embodiment includes an obtaining module 21 and a sending module 22.

The obtaining module 21 is configured to obtain parameters and optical line parameters of a node device. The node device is an optical line terminal OLT or an optical network unit ONU.

The sending module 22 is configured to send the parameters and the optical line parameters of the node device to a fault locating apparatus.

The apparatus further includes a fault locating module 23.

The fault locating module 23 is configured to input the parameters and the optical line parameters of the node device into a second fault locating model that is pre-established through training, to obtain a second fault locating result of the node device.

The sending module 22 is further configured to:
send the second fault locating result to the fault locating apparatus.

The apparatus provided in this embodiment may be configured to perform the method performed by the node device in the foregoing embodiments. A specific implementation and a technical effect are similar to those of the method. Details are not described herein again.

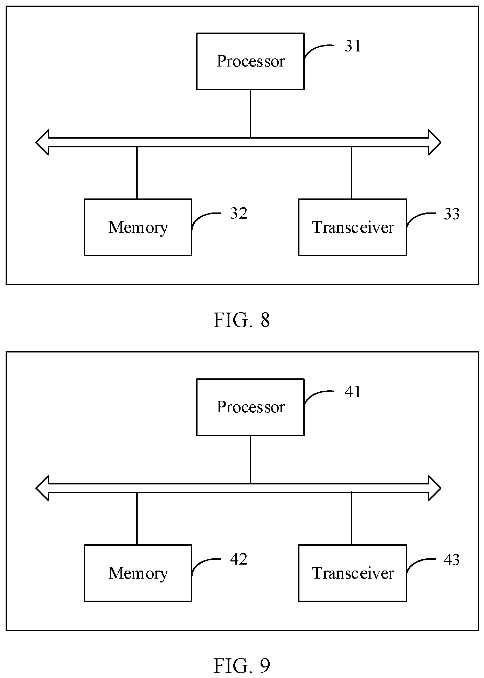

FIG. 8 is a schematic structural diagram of a fault locating apparatus according to Embodiment 8 of this application. As shown in FIG. 8, the fault locating apparatus provided in this embodiment includes a processor 31, a memory 32, and a transceiver 33. The memory 32 is configured to store an instruction. The transceiver 33 is configured to communicate with another device. The processor 31 is configured to execute the instruction stored in the memory 32, so that the fault locating apparatus performs the method performed by the fault locating apparatus in the foregoing method embodiments.

FIG. 9 is a schematic structural diagram of a node device according to Embodiment 9 of this application. As shown in FIG. 9, the node device provided in this embodiment includes a processor 41, a memory 42, and a transceiver 43. The memory 42 is configured to store an instruction. The transceiver 43 is configured to communicate with another device. The processor 41 is configured to execute the instruction stored in the memory 42, so that the node device performs the method performed by the node device in the foregoing method embodiments.

Embodiment 10 of this application provides a computer readable storage medium. The computer readable storage medium stores an instruction. When the instruction is executed, a computer is enabled to perform the method performed by the fault locating apparatus in the foregoing method embodiments.

Embodiment 11 of this application provides a computer readable storage medium. The computer readable storage medium stores an instruction. When the instruction is executed, a computer is enabled to perform the method performed by the node device in the foregoing method embodiments.

One or more of the foregoing modules or units may be implemented by software, hardware, or a combination thereof. When any one of the foregoing modules or units is implemented by software, the software exists in a manner of a computer program instruction, and is stored in the memory. The processor may be configured to: execute the program instruction, and implement the foregoing method procedure. The processor may include but is not limited to at least one of the following computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to execute software instructions to perform an operation or processing. The processor may be built in an SoC (system on a chip) or an application-specific integrated circuit (application-specific integrated circuit, ASIC), or may be an independent semiconductor chip. In addition to the core configured to execute software instructions to perform an operation or processing, the processor may further include a necessary hardware accelerator, for example, a field programmable gate array (field programmable gate array, FPGA), a PLD (programmable logic device), or a logic circuit for implementing a dedicated logic operation.

When the foregoing modules or units are implemented by hardware, the hardware may be any one of or any combination of a CPU, a microprocessor, a DSP, an MCU, an artificial intelligence processor, an ASIC, an SoC, an FPGA, a PLD, a dedicated digital circuit, a hardware accelerator, or a non-integrated discrete device. The hardware may run necessary software or be independent of software to perform the above method procedure.

Although this application is described with reference to the embodiments, in a process of implementing this application that claims protection, a person skilled in the art may understand and implement another variation of the disclosed embodiments by viewing the accompanying drawings, the disclosed content, and the accompanying claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to achieve a better effect.

This specification and the accompanying drawings are merely example description of this application defined by the accompanying claims.

## Claims

1. A passive optical network, PON, fault locating method, comprising:
obtaining (S101), by a fault locating apparatus, parameters and optical line parameters of a plurality of node devices in a PON, wherein the plurality of node devices comprise an optical line terminal, OLT, and an optical network unit, ONU, and the parameters of the plurality of node devices include parameters of an optical module and parameters of another component in the respective node device, and the optical line parameters include a quality of an optical signal on an optical line which indicates a path used for transmitting an optical signal between the OLT and the ONU; and
inputting (S102, S305), by the fault locating apparatus, the parameters and the optical line parameters of the plurality of node devices into a first fault locating model that is pre-established through training, to obtain a first fault locating result of the PON so that the fault locating apparatus performs centralized fault locating by using the first fault locating model so that the fault locating apparatus can locate a fault in the entire PON,
further comprising:
receiving (S309), by the fault locating apparatus, second fault locating results sent by the plurality of node devices, wherein the second fault locating result sent by each node device is obtained by the node device by inputting parameters and optical line parameters of the node device into a second fault locating model that is pre-established through training, each one of the plurality of node devices has performed distributed fault locating by using the second fault locating model;
obtaining, by the fault locating apparatus, a combined fault locating result based on the first fault locating result and the second fault locating results; and
sending (S306, S310), by the fault locating apparatus, the combined fault locating result to an operation support system, OSS, or an application server.

2. The method according to claim 1, wherein the obtaining, by a fault locating apparatus, parameters and optical line parameters of a plurality of node devices in a passive optical network PON comprises:
receiving, by the fault locating apparatus, the parameters and the optical line parameters of the node devices that are sent by the plurality of node devices; or
receiving, by the fault locating apparatus, the parameters and the optical line parameters of the plurality of node devices that are preprocessed by a collection apparatus.

3. The method according to claim 1 or 2, wherein the inputting, by the fault locating apparatus, the parameters and the optical line parameters of the plurality of node devices into a first fault locating model that is pre-established through training, to obtain a first fault locating result of the PON comprises:
performing, by the fault locating apparatus, feature extraction on the parameters and the optical line parameters of the plurality of node devices to obtain feature parameters; and
inputting, by the fault locating apparatus, the feature parameters into the first fault locating model, to obtain the first fault locating result.

4. The method according to claim 3, wherein after the performing, by the fault locating apparatus, feature extraction on the parameters and the optical line parameters of the plurality of node devices to obtain feature parameters, the method further comprises:
inputting, by the fault locating apparatus, the feature parameters into a topology model that is pre-established through training, to obtain topology information of the PON and/or topology information of a PON interface of the OLT; and
the inputting, by the fault locating apparatus, the feature parameters into the first fault locating model, to obtain the first fault locating result comprises:
inputting, by the fault locating apparatus, the feature parameters into a pre-established fault type model, to obtain a fault type; and
inputting, by the fault locating apparatus, the fault type and at least one of the topology information of the PON and the topology information of the PON interface into the first fault locating model, to obtain the first fault locating result.

5. The method according to any one of claims 1 to 4, further comprising:
performing, by the fault locating apparatus, fault prediction based on the first fault locating result, to obtain a fault prediction result; and
sending, by the fault locating apparatus, the fault prediction result and the first fault locating result to an operation support system, OSS, or an application server.

6. A passive optical network, PON, fault locating method, the PON comprises a plurality of node devices including an optical line terminal, OLT, and an optical network unit, ONU, the method comprises:
obtaining (S201, S301), by a node device, parameters and optical line parameters of the node device, wherein the node device is the OLT or is the ONU, the parameters include parameters of an optical module and parameters of another component in the node device, and the optical line parameters include a quality of an optical signal on an optical line which indicates a path used for transmitting an optical signal between the OLT and the ONU; and
sending (S202), by the node device, the parameters and the optical line parameters of the node device to a fault locating apparatus,
further comprising:
inputting (S203, S307), by the node device, the parameters and the optical line parameters of the node device into a fault locating model that is pre-established through training, to obtain a fault locating result of the node device so that distributed fault locating by using the fault locating model is performed by the node device; and
sending (S204, S308), by the node device, the fault locating result to the fault locating apparatus

7. A passive optical network, PON, fault locating apparatus, comprising:
an obtaining module (11), configured to obtain parameters and optical line parameters of a plurality of node devices in a PON, wherein the node devices comprise an optical line terminal, OLT, and an optical network unit, ONU, and the parameters of the plurality of node devices include parameters of an optical module and parameters of another component in the respective node device, and the optical line parameters include a quality of an optical signal on an optical line which indicates a path used for transmitting an optical signal between the OLT and the ONU; and
a fault locating module (12), configured to input the parameters and the optical line parameters of the plurality of node devices into a first fault locating model that is pre-established through training, to obtain a first fault locating result of the PON so that the fault locating apparatus is configured to perform centralized fault locating by using the first fault locating model so that the fault locating apparatus can locate a fault in the entire PON,
wherein the apparatus further comprises:
a receiving module, configured to receive second fault locating results sent by the plurality of node devices, wherein the second fault locating result sent by each node device is obtained by the node device by inputting parameters and optical line parameters of the node device into a second fault locating model that is pre-established through training, each one of the plurality of node devices has performed distributed fault locating by using the second fault locating model;
the fault locating module (12) is further configured to obtain a combined fault locating result based on the first fault locating result and the second fault locating results; and
a sending module (13), configured to send the combined fault locating result to an operation support system, OSS, or an application server.

8. The apparatus according to claim 7, wherein the obtaining module (11) is specifically configured to:
receive the parameters and the optical line parameters of the node devices that are sent by the plurality of node devices; or
receive the parameters and the optical line parameters of the plurality of node devices that are preprocessed by a collection apparatus.

9. The apparatus according to claim 7 or 8, wherein the fault locating module (12) is specifically configured to:
perform feature extraction on the parameters and the optical line parameters of the plurality of node devices to obtain feature parameters; and
input the feature parameters into the first fault locating model, to obtain the first fault locating result.

10. The apparatus according to claim 9, wherein the apparatus further comprises:
a topology determining module, configured to input the feature parameters into a topology model that is pre-established through training, to obtain topology information of the PON and/or topology information of a PON interface of the OLT; and
the fault locating module (12) is further configured to:
input the feature parameters into a pre-established fault type model, to obtain a fault type; and
input the fault type and at least one of the topology information of the PON and the topology information of the PON interface into the first fault locating model, to obtain the first fault locating result.

11. The apparatus according to any one of claims 7 to 10, further comprising:
a fault prediction module, configured to perform fault prediction based on the first fault locating result, to obtain a fault prediction result; and
the sending module (13) is further configured to send the fault prediction result and the first fault locating result to an operation support system, OSS, or an application server.

12. A node device for a passive optical network, PON, the PON comprises a plurality of node devices including an optical line terminal, OLT, and an optical network unit, ONU, the node device, comprises:
an obtaining module, configured to obtain parameters and optical line parameters of the node device, wherein the node device is the OLT or is the ONU, and the parameters include parameters of an optical module and parameters of another component in the node device, and the optical line parameters include a quality of an optical signal on an optical line which indicates a path used for transmitting an optical signal between the OLT and the ONU; and
a sending module (22), configured to send the parameters and the optical line parameters of the node device to a fault locating apparatus,
the node device further comprises a fault locating module (23) configured to input the parameters and the optical line parameters of the node device into a fault locating model that is pre-established through training, to obtain a fault locating result of the node device so that distributed fault locating by using the fault locating model is performed by the node device; and
the sending module (22) is further configured to send the fault locating result to the fault locating apparatus.

13. A passive optical network, PON, comprising a plurality of node devices according to claim 12 and a fault locating apparatus according to any one of claims 7 to 11.

## Patentansprüche

1. Verfahren zur Fehlerortung in einem passiven optischen Netzwerk, PON, umfassend:
Erlangen (S101), durch eine Fehlerortungsvorrichtung, von Parametern und optischen Leitungsparametern einer Vielzahl von Knotengeräten in einem PON, wobei die Vielzahl von Knotengeräten ein optisches Leitungsterminal, OLT, und eine optische Netzwerkeinheit, ONU, umfasst, und die Parameter der Vielzahl von Knotengeräten Parameter eines optischen Moduls und Parameter einer anderen Komponente in dem jeweiligen Knotengerät beinhalten, und die optischen Leitungsparameter eine Qualität eines optischen Signals auf einer optischen Leitung, die einen zum Übertragen eines optischen Signals zwischen dem OLT und der ONU verwendeten Pfad angibt, beinhalten; und
Eingeben (S102, S305), durch die Fehlerortungsvorrichtung, der Parameter und der optischen Leitungsparameter der Vielzahl von Knotengeräten in ein erstes Fehlerortungsmodell, das durch Training vorab erstellt wurde, um ein erstes Fehlerortungsergebnis des PON zu erlangen, so dass die Fehlerortungsvorrichtung eine zentralisierte Fehlerortung unter Verwendung des ersten Fehlerortungsmodells durchführt, so dass die Fehlerortungsvorrichtung einen Fehler in dem gesamten PON orten kann,
ferner umfassend:
Empfangen (S309), durch die Fehlerortungsvorrichtung, zweiter Fehlerortungsergebnisse, die von der Vielzahl von Knotengeräten gesendet werden, wobei das zweite Fehlerortungsergebnis, das von jedem Knotengerät gesendet wird, von dem Knotengerät durch Eingeben von Parametern und optischen Leitungsparametern des Knotengeräts in ein zweites Fehlerortungsmodell, das durch Training vorab erstellt wurde, erlangt wird, wobei jedes der Vielzahl von Knotengeräten eine verteilte Fehlerortung unter Verwendung des zweiten Fehlerortungsmodells durchgeführt hat;
Erlangen, durch die Fehlerortungsvorrichtung, eines kombinierten Fehlerortungsergebnisses basierend auf dem ersten Fehlerortungsergebnis und den zweiten Fehlerortungsergebnissen; und
Senden (S306, S310), durch die Fehlerortungsvorrichtung, des kombinierten Fehlerortungsergebnisses an ein Betriebsunterstützungssystem, OSS, oder einen Anwendungsserver.

2. Verfahren nach Anspruch 1, wobei das Erlangen, durch eine Fehlerortungsvorrichtung, von Parametern und optischen Leitungsparametern einer Vielzahl von Knotengeräten in einem passiven optischen Netzwerk, PON, Folgendes umfasst:
Empfangen, durch die Fehlerortungsvorrichtung, der Parameter und der optischen Leitungsparameter der Knotengeräte, die von der Vielzahl von Knotengeräten gesendet werden; oder
Empfangen, durch die Fehlerortungsvorrichtung, der Parameter und der optischen Leitungsparameter der Vielzahl von Knotengeräten, die von einer Sammelvorrichtung vorverarbeitet werden.

3. Verfahren nach Anspruch 1 oder 2, wobei das Eingeben, durch die Fehlerortungsvorrichtung, der Parameter und der optischen Leitungsparameter der Vielzahl von Knotengeräten in ein erstes Fehlerortungsmodell, das durch Training vorab erstellt wurde, um ein erstes Fehlerortungsergebnis des PON zu erlangen, Folgendes umfasst:
Durchführen, durch die Fehlerortungsvorrichtung, einer Merkmalsextraktion an den Parametern und den optischen Leitungsparametern der Vielzahl von Knotengeräten, um Merkmalsparameter zu erlangen; und
Eingeben, durch die Fehlerortungsvorrichtung, der Merkmalsparameter in das erste Fehlerortungsmodell, um das erste Fehlerortungsergebnis zu erlangen.

4. Verfahren nach Anspruch 3, wobei, nach dem Durchführen, durch die Fehlerortungsvorrichtung, der Merkmalsextraktion an den Parametern und den optischen Leitungsparametern der Vielzahl von Knotengeräten, um Merkmalsparameter zu erlangen, das Verfahren ferner Folgendes umfasst:
Eingeben, durch die Fehlerortungsvorrichtung, der Merkmalsparameter in ein Topologiemodell, das durch Training vorab erstellt wurde, um Topologieinformationen des PON und/oder Topologieinformationen einer PON-Schnittstelle des OLT zu erlangen; und
das Eingeben, durch die Fehlerortungsvorrichtung, der Merkmalsparameter in das erste Fehlerortungsmodell, um das erste Fehlerortungsergebnis zu erlangen, Folgendes umfasst:
Eingeben, durch die Fehlerortungsvorrichtung, der Merkmalsparameter in ein vorab erstelltes Fehlertypmodell, um einen Fehlertyp zu erlangen; und
Eingeben, durch die Fehlerortungsvorrichtung, des Fehlertyps und mindestens einer der Topologieinformationen des PON und der Topologieinformationen der PON-Schnittstelle in das erste Fehlerortungsmodell, um das erste Fehlerortungsergebnis zu erlangen.

5. Verfahren nach einem der Ansprüche 1 bis 4, ferner umfassend:
Durchführen, durch die Fehlerortungsvorrichtung, einer Fehlervorhersage basierend auf dem ersten Fehlerortungsergebnis, um ein Fehlervorhersageergebnis zu erlangen; und
Senden, durch die Fehlerortungsvorrichtung, des Fehlervorhersageergebnisses und des ersten Fehlerortungsergebnisses an ein Betriebsunterstützungssystem, OSS, oder einen Anwendungsserver.

6. Verfahren zur Fehlerortung in einem passiven optischen Netzwerk, PON, wobei das PON eine Vielzahl von Knotengeräten, einschließlich eines optischen Leitungsterminals, OLT, und einer optischen Netzwerkeinheit, ONU, umfasst, wobei das Verfahren Folgendes umfasst:
Erlangen (S201, S301), durch ein Knotengerät, von Parametern und optischen Leitungsparametern des Knotengeräts, wobei das Knotengerät das OLT ist oder die ONU ist, und die Parameter Parameter eines optischen Moduls und Parameter einer anderen Komponente in dem Knotengerät beinhalten und die optischen Leitungsparameter eine Qualität eines optischen Signals auf einer optischen Leitung, die einen zum Übertragen eines optischen Signals zwischen dem OLT und der ONU verwendeten Pfad angibt, beinhalten; und
Senden (S202), durch das Knotengerät, der Parameter und der optischen Leitungsparameter des Knotengeräts an eine Fehlerortungsvorrichtung, ferner umfassend:
Eingeben (S203, S307), durch das Knotengerät, der Parameter und der optischen Leitungsparameter des Knotengeräts in ein Fehlerortungsmodell, das durch Training vorab erstellt wurde, um ein Fehlerortungsergebnis des Knotengeräts zu erlangen, so dass eine verteilte Fehlerortung unter Verwendung des Fehlerortungsmodells durch das Knotengerät durchgeführt wird; und
Senden (S204, S308), durch das Knotengerät, des Fehlerortungsergebnisses an die Fehlerortungsvorrichtung.

7. Vorrichtung zur Fehlerortung in einem passiven optischen Netzwerk, PON, umfassend:
ein Erlangungsmodul (11), das dazu konfiguriert ist, Parameter und optische Leitungsparameter einer Vielzahl von Knotengeräten in einem PON zu erlangen, wobei die Knotengeräte ein optisches Leitungsterminal, OLT, und eine optische Netzwerkeinheit, ONU, umfassen, und die Parameter der Vielzahl von Knotengeräten Parameter eines optischen Moduls und Parameter einer anderen Komponente in dem jeweiligen Knotengerät beinhalten, und die optischen Leitungsparameter eine Qualität eines optischen Signals auf einer optischen Leitung, die einen zum Übertragen eines optischen Signals zwischen dem OLT und der ONU verwendeten Pfad angibt, beinhalten; und
ein Fehlerortungsmodul (12), das dazu konfiguriert ist, die Parameter und die optischen Leitungsparameter der Vielzahl von Knotengeräten in ein erstes Fehlerortungsmodell einzugeben, das durch Training vorab erstellt wurde, um ein erstes Fehlerortungsergebnis des PON zu erlangen, so dass die Fehlerortungsvorrichtung dazu konfiguriert ist, eine zentralisierte Fehlerortung unter Verwendung des ersten Fehlerortungsmodells durchzuführen, so dass die Fehlerortungsvorrichtung einen Fehler in dem gesamten PON orten kann,
wobei die Vorrichtung ferner Folgendes umfasst:
ein Empfangsmodul, das dazu konfiguriert ist, zweite Fehlerortungsergebnisse zu empfangen, die von der Vielzahl von Knotengeräten gesendet werden, wobei das zweite Fehlerortungsergebnis, das von jedem Knotengerät gesendet wird, von dem Knotengerät durch Eingeben von Parametern und optischen Leitungsparametern des Knotengeräts in ein zweites Fehlerortungsmodell, das durch Training vorab erstellt wurde, erlangt wird, wobei jedes der Vielzahl von Knotengeräten eine verteilte Fehlerortung unter Verwendung des zweiten Fehlerortungsmodells durchgeführt hat;
das Fehlerortungsmodul (12) ferner dazu konfiguriert ist, ein kombiniertes Fehlerortungsergebnis basierend auf dem ersten Fehlerortungsergebnis und den zweiten Fehlerortungsergebnissen zu erlangen; und
ein Sendemodul (13), das dazu konfiguriert ist, das kombinierte Fehlerortungsergebnis an ein Betriebsunterstützungssystem, OSS, oder einen Anwendungsserver zu senden.

8. Vorrichtung nach Anspruch 7, wobei das Erlangungsmodul (11) insbesondere zu Folgendem konfiguriert ist:
Empfangen der Parameter und der optischen Leitungsparameter der Knotengeräte, die von der Vielzahl von Knotengeräten gesendet werden; oder
Empfangen der Parameter und der optischen Leitungsparameter der Vielzahl von Knotengeräten, die von einer Sammelvorrichtung vorverarbeitet werden.

9. Vorrichtung nach Anspruch 7 oder 8, wobei das Fehlerortungsmodul (12) insbesondere zu Folgendem konfiguriert ist:
Durchführen von Merkmalsextraktion an den Parametern und den optischen Leitungsparametern der Vielzahl von Knotengeräten, um Merkmalsparameter zu erlangen; und
Eingeben der Merkmalsparameter in das erste Fehlerortungsmodell, um das erste Fehlerortungsergebnis zu erlangen.

10. Vorrichtung nach Anspruch 9, wobei die Vorrichtung ferner Folgendes umfasst:
ein Topologiebestimmungsmodul, das dazu konfiguriert ist, die Merkmalsparameter in ein Topologiemodell, das durch Training vorab erstellt wurde, einzugeben, um Topologieinformationen des PON und/oder Topologieinformationen einer PON-Schnittstelle des OLT zu erlangen; und
wobei das Fehlerortungsmodul (12) ferner zu Folgendem konfiguriert ist:
Eingeben der Merkmalsparameter in ein vorab erstelltes Fehlertypmodell, um einen Fehlertyp zu erlangen; und
Eingeben des Fehlertyps und mindestens einer der Topologieinformationen des PON und der Topologieinformationen der PON-Schnittstelle in das erste Fehlerortungsmodell, um das erste Fehlerortungsergebnis zu erlangen.

11. Vorrichtung nach einem der Ansprüche 7 bis 10, ferner umfassend:
ein Fehlervorhersagemodul, das dazu konfiguriert ist, eine Fehlervorhersage basierend auf dem ersten Fehlerortungsergebnis durchzuführen, um ein Fehlervorhersageergebnis zu erlangen; und
wobei das Sendemodul (13) ferner dazu konfiguriert ist, das Fehlervorhersageergebnis und das erste Fehlerortungsergebnis an ein Betriebsunterstützungssystem, OSS, oder einen Anwendungsserver zu senden.

12. Knotengerät für ein passives optisches Netzwerk, PON, wobei das PON eine Vielzahl von Knotengeräten, einschließlich eines optischen Leitungsterminals, OLT, und einer optischen Netzwerkeinheit, ONU, umfasst, wobei das Knotengerät Folgendes umfasst:
ein Erlangungsmodul, das dazu konfiguriert ist, Parameter und optische Leitungsparameter des Knotengeräts zu erlangen, wobei das Knotengerät das OLT ist oder die ONU ist, und die Parameter Parameter eines optischen Moduls und Parameter einer anderen Komponente in dem Knotengerät beinhalten, und die optischen Leitungsparameter eine Qualität eines optischen Signals auf einer optischen Leitung, die einen zum Übertragen eines optischen Signals zwischen dem OLT und der ONU verwendeten Pfad angibt, beinhalten; und
ein Sendemodul (22), das dazu konfiguriert ist, die Parameter und die optischen Leitungsparameter des Knotengeräts an eine Fehlerortungsvorrichtung zu senden,
wobei das Knotengerät ferner ein Fehlerortungsmodul (23) umfasst, das dazu konfiguriert ist, die Parameter und die optischen Leitungsparameter des Knotengeräts in ein Fehlerortungsmodell, das durch Training vorab erstellt wurde, einzugeben, um ein Fehlerortungsergebnis des Knotengeräts zu erlangen, so dass eine verteilte Fehlerortung unter Verwendung des Fehlerortungsmodells durch das Knotengerät durchgeführt wird; und
wobei das Sendemodul (22) ferner dazu konfiguriert ist, das Fehlerortungsergebnis an die Fehlerortungsvorrichtung zu senden.

13. Passives optisches Netzwerk, PON, umfassend eine Vielzahl von Knotengeräten nach Anspruch 12 und eine Fehlerortungsvorrichtung nach einem der Ansprüche 7 bis 11.

## Revendications

1. Procédé de localisation de défaillance de réseau optique passif, PON, comprenant :
l'obtention (S101), par un appareil de localisation de défaillance, de paramètres et de paramètres de ligne optique d'une pluralité de dispositifs noeuds dans un PON, dans lequel la pluralité de dispositifs noeuds comprennent un terminal de ligne optique, OLT, et une unité de réseau optique, ONU, et les paramètres de la pluralité de dispositifs noeuds comportent des paramètres d'un module optique et des paramètres d'un autre composant dans le dispositif noeud respectif, et les paramètres de ligne optique comportent une qualité d'un signal optique sur une ligne optique qui indique un chemin utilisé pour transmettre un signal optique entre l'OLT et l'ONU ; et
l'entrée (S102, S305), par l'appareil de localisation de défaillance, des paramètres et des paramètres de ligne optique de la pluralité de dispositifs noeuds dans un premier modèle de localisation de défaillance qui est préétabli par apprentissage, pour obtenir un premier résultat de localisation de défaillance du PON de telle sorte que l'appareil de localisation de défaillance effectue une localisation de défaillance centralisée à l'aide du premier modèle de localisation de défaillance de sorte que l'appareil de localisation de défaillance puisse localiser une défaillance dans l'ensemble du PON,
comprenant en outre :
la réception (S309), par l'appareil de localisation de défaillance, de seconds résultats de localisation de défaillance envoyés par la pluralité de dispositifs noeuds, dans lequel le second résultat de localisation de défaillance envoyé par chaque dispositif noeud est obtenu par le dispositif noeud en entrant des paramètres et des paramètres de ligne optique du dispositif noeud dans un second modèle de localisation de défaillance qui est préétabli par apprentissage, chacun de la pluralité de dispositifs noeuds a effectué une localisation de défaillance distribuée à l'aide du second modèle de localisation de défaillance ;
l'obtention, par l'appareil de localisation de défaillance, d'un résultat de localisation de défaillance combiné sur la base du premier résultat de localisation de défaillance et des seconds résultats de localisation de défaillance ; et
l'envoi (S306, S310), par l'appareil de localisation de défaillance, du résultat de localisation de défaillance combiné à un système de support d'exploitation, OSS, ou à un serveur d'applications.

2. Procédé selon la revendication 1, dans lequel l'obtention, par un appareil de localisation de défaillance, de paramètres et de paramètres de ligne optique d'une pluralité de dispositifs noeuds dans un réseau optique passif PON comprend :
la réception, par l'appareil de localisation de défaillance, des paramètres et des paramètres de ligne optique des dispositifs noeuds qui sont envoyés par la pluralité de dispositifs noeuds ; ou
la réception, par l'appareil de localisation de défaillance, des paramètres et des paramètres de ligne optique de la pluralité de dispositifs noeuds qui sont prétraités par un appareil de collecte.

3. Procédé selon la revendication 1 ou 2, dans lequel l'entrée, par l'appareil de localisation de défaillance, des paramètres et des paramètres de ligne optique de la pluralité de dispositifs noeuds dans un premier modèle de localisation de défaillance qui est préétabli par apprentissage, pour obtenir un premier résultat de localisation de défaillance du PON comprend :
l'exécution, par l'appareil de localisation de défaillance, d'une extraction de caractéristiques sur les paramètres et les paramètres de ligne optique de la pluralité de dispositifs noeuds pour obtenir des paramètres de caractéristiques ; et
l'entrée, par l'appareil de localisation de défaillance, des paramètres de caractéristiques dans le premier modèle de localisation de défaillance, pour obtenir le premier résultat de localisation de défaillance.

4. Procédé selon la revendication 3, dans lequel après avoir effectué, par l'appareil de localisation de défaillance, une extraction de caractéristiques sur les paramètres et les paramètres de ligne optique de la pluralité de dispositifs noeuds pour obtenir des paramètres de caractéristiques, le procédé comprend en outre :
l'entrée, par l'appareil de localisation de défaillance, des paramètres de caractéristiques dans un modèle de topologie qui est préétabli par apprentissage, pour obtenir des informations topologiques du PON et/ou des informations topologiques d'une interface de PON de l'OLT ; et
l'entrée, par l'appareil de localisation de défaillance, des paramètres de caractéristiques dans le premier modèle de localisation de défaillance, pour obtenir le premier résultat de localisation de défaillance comprend :
l'entrée, par l'appareil de localisation de défaillance, des paramètres de caractéristiques dans un modèle de type de défaillance préétabli, pour obtenir un type de défaillance ; et
l'entrée, par l'appareil de localisation de défaillance, du type de défaillance et au moins l'une des informations topologiques du PON et/ou des informations topologiques de l'interface de PON dans le premier modèle de localisation de défaillance, pour obtenir le premier résultat de localisation de défaillance.

5. Procédé selon l'une quelconque des revendications 1 à 4, comprenant en outre :
l'exécution, par l'appareil de localisation de défaillance, d'une prédiction de défaillance sur la base du premier résultat de localisation de défaillance, pour obtenir un résultat de prédiction de défaillance ; et
l'envoi, par l'appareil de localisation de défaillance, du résultat de prédiction de défaillance et du premier résultat de localisation de défaillance à un système de support d'exploitation, OSS, ou à un serveur d'applications.

6. Procédé de localisation de défaillance de réseau optique passif, PON, le PON comprend une pluralité de dispositifs noeuds comportant un terminal de ligne optique, OLT, et une unité de réseau optique, ONU, le procédé comprend :
l'obtention (S201, S301), par un dispositif noeud, de paramètres et de paramètres de ligne optique du dispositif noeud, dans lequel le dispositif noeud est l'OLT ou l'ONU, les paramètres comportent des paramètres d'un module optique et des paramètres d'un autre composant dans le dispositif noeud, et les paramètres de ligne optique comportent une qualité d'un signal optique sur une ligne optique qui indique un chemin utilisé pour transmettre un signal optique entre l'OLT et l'ONU ; et
l'envoi (S202), par le dispositif noeud, des paramètres et des paramètres de ligne optique du dispositif noeud à un appareil de localisation de défaillance,
comprenant en outre :
l'entrée (S203, S307), par le dispositif noeud, des paramètres et des paramètres de ligne optique du dispositif noeud dans un modèle de localisation de défaillance qui est préétabli par apprentissage, pour obtenir un résultat de localisation de défaillance du dispositif noeud de telle sorte qu'une localisation de défaillance distribuée à l'aide du modèle de localisation de défaillance est effectuée par le dispositif noeud ; et
l'envoi (S204, S308), par le dispositif noeud, du résultat de localisation de défaillance à l'appareil de localisation de défaillance.

7. Appareil de localisation de défaillance d'un réseau optique passif, PON, comprenant :
un module d'obtention (11), configuré pour obtenir des paramètres et des paramètres de ligne optique d'une pluralité de dispositifs noeuds dans un PON, dans lequel les dispositifs noeuds comprennent un terminal de ligne optique, OLT, et une unité de réseau optique, ONU, et les paramètres de la pluralité de dispositifs noeuds comportent des paramètres d'un module optique et des paramètres d'un autre composant dans le dispositif noeud respectif, et les paramètres de ligne optique comportent une qualité d'un signal optique sur une ligne optique qui indique un chemin utilisé pour transmettre un signal optique entre l'OLT et l'ONU ; et
un module de localisation de défaillance (12), configuré pour entrer les paramètres et les paramètres de ligne optique de la pluralité de dispositifs noeuds dans un premier modèle de localisation de défaillance qui est préétabli par apprentissage, pour obtenir un premier résultat de localisation de défaillance du PON de telle sorte que l'appareil de localisation de défaillance est configuré pour effectuer une localisation de défaillance centralisée à l'aide du premier modèle de localisation de défaillance de sorte que l'appareil de localisation de défaillance puisse localiser une défaillance dans l'ensemble du PON,
dans lequel l'appareil comprend en outre :
un module de réception, configuré pour recevoir des seconds résultats de localisation de défaillance envoyés par la pluralité de dispositifs noeuds, dans lequel le second résultat de localisation de défaillance envoyé par chaque dispositif noeud est obtenu par le dispositif noeud en entrant des paramètres et des paramètres de ligne optique du dispositif noeud dans un second modèle de localisation de défaillance qui est préétabli par apprentissage, chacun de la pluralité de dispositifs noeuds a effectué une localisation de défaillance distribuée à l'aide du second modèle de localisation de défaillance ;
le module de localisation de défaillance (12) est en outre configuré pour obtenir un résultat de localisation de défaillance combiné sur la base du premier résultat de localisation de défaillance et des seconds résultats de localisation de défaillance ; et
un module d'envoi (13), configuré pour envoyer le résultat de localisation de défaillance combiné à un système de support d'exploitation, OSS, ou à un serveur d'applications.

8. Appareil selon la revendication 7, dans lequel le module d'obtention (11) est spécifiquement configuré pour :
recevoir les paramètres et les paramètres de ligne optique des dispositifs noeuds qui sont envoyés par la pluralité de dispositifs noeuds ; ou
recevoir les paramètres et les paramètres de ligne optique de la pluralité de dispositifs noeuds qui sont prétraités par un appareil de collecte.

9. Appareil selon la revendication 7 ou 8, dans lequel le module de localisation de défaillance (12) est spécifiquement configuré pour :
exécuter une extraction de caractéristiques sur les paramètres et les paramètres de ligne optique de la pluralité de dispositifs noeuds pour obtenir des paramètres de caractéristiques ; et
entrer les paramètres de caractéristiques dans le premier modèle de localisation de défaillance, pour obtenir le premier résultat de localisation de défaillance.

10. Appareil selon la revendication 9, dans lequel l'appareil comprend en outre :
un module de détermination de topologie, configuré pour entrer les paramètres de caractéristiques dans un modèle de topologie qui est préétabli par apprentissage, pour obtenir des informations topologiques du PON et/ou des informations topologiques d'une interface de PON de l'OLT ; et
le module de localisation de défaillance (12) est en outre configuré pour :
entrer les paramètres de caractéristiques dans un modèle de type de défaillance préétabli, pour obtenir un type de défaillance ; et
entrer le type de défaillance et au moins l'une des informations topologiques du PON et/ou des informations topologiques de l'interface de PON dans le premier modèle de localisation de défaillance, pour obtenir le premier résultat de localisation de défaillance.

11. Appareil selon l'une quelconque des revendications 7 à 10, comprenant en outre :
un module de prédiction de défaillance, configuré pour effectuer une prédiction de défaillance sur la base du premier résultat de localisation de défaillance, pour obtenir un résultat de prédiction de défaillance ; et
le module d'envoi (13) est en outre configuré pour envoyer le résultat de prédiction de défaillance et le premier résultat de localisation de défaillance à un système de support d'exploitation, OSS, ou à un serveur d'applications.

12. Dispositif noeud pour un réseau optique passif, PON, le PON comprend une pluralité de dispositifs noeuds comportant un terminal de ligne optique, OLT, et une unité de réseau optique, ONU, le dispositif noeud comprend :
un module d'obtention, configuré pour obtenir des paramètres et des paramètres de ligne optique du dispositif noeud, dans lequel le dispositif noeud est l'OLT ou l'ONU, et les paramètres comportent des paramètres d'un module optique et des paramètres d'un autre composant dans le dispositif noeud, et les paramètres de ligne optique comportent une qualité d'un signal optique sur une ligne optique qui indique un chemin utilisé pour transmettre un signal optique entre l'OLT et l'ONU ; et
un module d'envoi (22), configuré pour envoyer les paramètres et les paramètres de ligne optique du dispositif noeud à un appareil de localisation de défaillance,
le dispositif noeud comprend en outre un module de localisation de défaillance (23) configuré pour entrer les paramètres et les paramètres de ligne optique du dispositif noeud dans un modèle de localisation de défaillance qui est préétabli par apprentissage, pour obtenir un résultat de localisation de défaillance du dispositif noeud de telle sorte qu'une localisation de défaillance distribuée à l'aide du modèle de localisation de défaillance est effectuée par le dispositif noeud ; et
le module d'envoi (22) est en outre configuré pour envoyer le résultat de localisation de défaillance à l'appareil de localisation de défaillance.

13. Réseau optique passif, PON, comprenant une pluralité de dispositifs noeuds selon la revendication 12 et un appareil de localisation de défaillance selon l'une quelconque des revendications 7 à 11.
